# EUROPEAN PATENT APPLICATION

(11) **EP 1 801 711 A1**
(43) Date of publication of application: **27.06.2007**
(21) Application number: 05112681.1
(22) Date of filing: 21.12.2005
(51) Int. Cl.: G06F 17/30

(54) **Method for remotely organizing audio-visual items stored in a central database**

(71) Applicant: Transmedia Communications Sàrl, 1203 Genève (CH)
(72) Inventor: Tsarkova, Natalia, 1206, Genève (CH)
(74) Representative: Wenger, Joel-Théophile

(57) **Abstract**

A method for remotely organizing audio-visual items (I1, I2,...In) stored in a first database (DB1) and managed by a control center (CC), each item (I1, I2,...In) having at least an identifier, a rights descriptor and at least one visual extract associated with the content of the item (I1, I2,...In), said method comprising the steps of :
- defining a second database (DB2) comprising a user's list of selections, each selection comprising at least the item's identifier and a position in the list,
- displaying on a remote user's terminal display (GUI) a plurality of visual extracts of the available audio-visual items (AI) on a first area (A1) of said display (GUI),
- displaying on the remote user's terminal display (GUI) the visual extracts related to the item's identifier contained in the second database (DB2) on a second area (A2),
- selecting by the user one visual extract related to a selected audio-visual item (l1, I2,...In)) from the first area (A1) and moving it towards the second area (A2) and defining the position in the user's list by visually placing the moved item (I1, I2,...In) in the desired position among the previously selected items (SI, PL), this selection updating the second database (DB2) with the selected item's identifier of the moved item (I1, I2,...In),
- accessing a third database (DB3) containing user's definition and rights, verifying the user's selected items (SI, PL) by comparing the rights descriptor with the user's rights from said database (DB3),
- transmit a request to the control center (CC) for obtaining the content (C) associated to the selected audio-visual items (SI, PL),
- sending from the control center (CC) to the user's terminal a data stream including the content (C) arranged in a sequence defined in the list of the selected audio-visual items (SI, PL).
- updating the third database (DB3) with the transmitted items (I1, I2,...In) for accounting purpose.

## Description

### Field of the invention

The present invention concerns the remote organization of audio-visual items, which associated contents are intended to be broadcasted via a control center to a terminal. In particular, a user-friendly interface is described with features allowing a secured data transmission.

### Background of the invention

An example of selecting video items or sequences and placing them into a predefined order appears in video movies editing processes. The video sequences are first downloaded from the storing unit of a movie camera and than selected on the display of a personal computer thanks to their representation in a reduced form. The user selects sequences or parts of them in various lengths in a first window for transferring them into a second window where the video movie is constructed by arranging the selected sequences in a predefined order. Once the video movie is edited, it is converted into a suitable format to be stored on a disk or other storing device. Sound items, which are downloaded from the same source as the video items or from another storing unit are handled in a similar manner and combined with the arranged video sequences. In this process the final audio-visual content is stored locally on a storing device such as a hard or an optical disc for its distribution.

The document US2005050218 describes another application where communications are automated between video asset owners and an operator who provides video delivery services. These communications coordinate the distribution of video assets in accordance with content ownership and distribution rights granted from each video asset owner to the operator. The video asset owners and the operator use the automated communication for creating video items and for selecting and distributing video assets. This automated communication system enables the video asset owners and the operator to accomplish their respective tasks by accessing a single system. The video asset owner determines assets to be made available to the operator during a particular license time period and adds those video assets to the distribution system of the operator. The latter selects one or more video assets specified by one or more video asset owners and the corresponding periods of time during which the video asset is to be offered to viewers.

In a further document US6535888, a method and system for providing a visual search directory is described. A system and method for visually and functionally extending the reach of web sites includes a plurality of interactive, animated, multimedia previews of web sites organized into a searchable database. The searchable database is stored on a central server and forms the backend of a visual search directory. Users access the database through an interface that allows them to perform a search and receive results from the search in the form of animated, multimedia previews of relevant web sites. In one embodiment, a site feature includes an interactive, visual shopping cart module that allows consumers to drag-and-drop products and components into the shopping cart, and then to purchase those products and components directly through the site feature. As a result, that data is continually associated to the icon, regardless of its location on the Web. Therefore, when an icon is dragged into the shopping cart window, the price of the product is automatically updated in real-time using the relevant data associated with the graphic, and can be immediately displayed through a window to the user.

The document US2004139465 describes an electronic program guide (EPG) with hyperlinks to target resources. An interactive entertainment system has a program provider, which distributes video content programs to multiple subscribers over a distribution network. Each subscriber has a user interface unit receiving the digital video program and converting it for display on a television monitor, or other display unit. The user interface unit has a processor and memory. An electronic programming guide (EPG) resides in the memory of user interface unit and is executable on the processor to organize programming information that is descriptive of the programs supplied over the interactive entertainment system. The EPG supports a user interface, which visually correlates programs titles to scheduled viewing times. A hyperlink browser also resides in memory and is executable on the processor. One or more hyperlinks, which reference target resources containing interactive content related to the video programs, are integrated as part of the EPG interface. The hyperlinks can be placed in the program titles, channel numbers, or description area, and can be situated alone or embedded within other text. When the user activates a hyperlink within the EPG, the user interface unit launches the browser to activate the target resource specified by the hyperlink. The data retrieved from the target resource is then displayed on the display unit. The user can also drag a particular program or channel label from its location within the EPG interface and drop the label at another location on the display unit. This drag-and-drop operation associates an instruction with the label that will execute in response to activation of the label. The instruction might cause the visual display unit to tune to the program or channel represented by the particular label, or to initiate procedures to record the program when it begins playing, or to jump to a related target resource, such as a website.

The document US2003037035 deals with a method and system for providing a data marking device and data searching system including a user terminal connected to a server terminal over an Internet connection for transmitting find music search request. The server terminal in response accesses one or more storage units and retrieves corresponding information such as other marked data for transmission to the user terminal. The user may perform a drag and drop operation (using a computer mouse, for example) to drag one of the bookmarked music clips displayed on display unit and to drop it in find music icon. It should be noted that the user has received the list of bookmarked music clips from server terminal, and each of the received bookmarked music clip and the corresponding information is displayed on user terminal output unit as a separate icon or any other equivalent displaying means. When the bookmarked music clip is dropped into find music icon, server terminal is configured to transmit search status display to output unit of user terminal for display thereon. Additionally, in one embodiment, users may establish the desired level of third party access to their corresponding user terminals such as, limited access, unlimited access, and no access type levels to allow restricted searches, unrestricted searches, and no searches, respectively, by other user terminals executing the find music operation.

The systems and methods described above have several drawbacks such as a complex user interface, dependency on the user unit configuration and performances, needs of high capacity local storage means.

### Summary of the invention

The present invention aims to overcome the drawbacks of the prior art systems and their functioning by providing a method for remotely managing and retrieving audio-visual items from a central database for building a customized digital audio-visual data stream. This content of this stream is associated to the selected items and can be visualized and/or stored in a storing device for a later use. This method is carried out by means of a graphic and user-friendly interface on a terminal unit while ensuring secure data transmission and central management of the rights associated to each item stored in the database.

This aim is reached with a method for remotely organizing audio-visual items stored in a first database and managed by a control center, each item having at least an item identifier, a right descriptor and at least one visual extract associated with the content of the item, said method comprising the steps of :
- defining a second database comprising a user's list of selections, each selection comprising at least the item's identifier and a position in the list,
- displaying on a remote user's terminal display a plurality of visual extracts of the available audio-visual items on a first area of said display,
- displaying on the remote user's terminal display the visual extracts related to the item's identifier contained in the second database on a second area,
- selecting by the user one visual extract related to a selected audio-visual item from the first area and moving it towards the second area and defining the position in the user's list by visually placing the moved item in the desired position among the previously selected items, this selection updating the second database with the selected item's identifier of the moved item and the position in the list,
- accessing a third database containing user's definition and rights, verifying the user's selected items by comparing the right descriptor of the selected items with the user's rights from said database,
- transmitting a request to the control center for obtaining the content associated to the selected audio-visual items,
- sending from the control center to the user's terminal a data stream including the selected items arranged in a sequence defined in the list of the selected audio-visual items,
- updating the third database with the transmitted items for accounting purpose.

The user's terminal, connected to a control center via a communication network, shows preferably two areas on a display. A first area is allotted to the first database containing audio-visual items available to an authorized user. An item is represented for example with a significant picture extracted from the content associated to this item accompanied with a suitable descriptor or identifier. The second area is attached to the second database wherein items selected from the first database are moved in order to build a sequence also called play list in a predefined order. In other words the display order of the items in the first area is generally different from the order of the selected items displayed in the second area. In both areas, the items can be displayed with the same attributes such as a picture, movie and an identifier.

A play list is an information object wherein several data extracted from the database are stored comprising all necessary links for retrieving or playing the content relative to the items of the list.

Moving an item from the first to the second area leads to an access to a second database containing user-selected items to update this database with the moved item. A connection is established with the third database to compare the item's right descriptor with the user's rights. If the results of the comparison are positive, the control center accepts the play list of selected items contained in the second database. Therefore, the content associated to each item can be downloaded from the first database in form of a digital audio-visual data stream ready to be visualized on the display. The streaming position of the displayed content corresponds to the one defined previously in the second display area during the selection of the items. In an embodiment the data stream can be stored on a storing unit connected to the user's terminal.

An advantage of this method is that the whole data management is carried on line without needing any security module attached to the user's terminal. A security module is a device known as inviolable, such a smart card for example, containing encryption/decryption keys and user data defining rights for processing data. In the method according to the invention, the user rights are managed through the third database, which is integrated in the control center as well as the first and second database. In an embodiment the user's terminal can be a personal computer, which can be changed easily without modifying any user specific configuration like replacing a smart card, a dongle or other security device.

### Brief Description of the drawings

The invention will be better understood thanks to the following detailed description referring to the enclosed figures given as a non-limitative examples.

Figure 1 represents a block diagram of a system able to carry out the method for remotely selecting, with a user terminal, audio-visual items from a control center comprising management databases.

Figure 2 shows an example of user interface for personal computer using a dynamic play list engine and available items from the fist database.

Figure 3 shows the user interface of figure 2 switched to a monitor for displaying contents of play lists or information messages related to play list items.

Figure 4 shows an example of a simplified user interface for Personal Digital Assistant (PDA) with dynamic play list engine.

### Detailed description of the invention

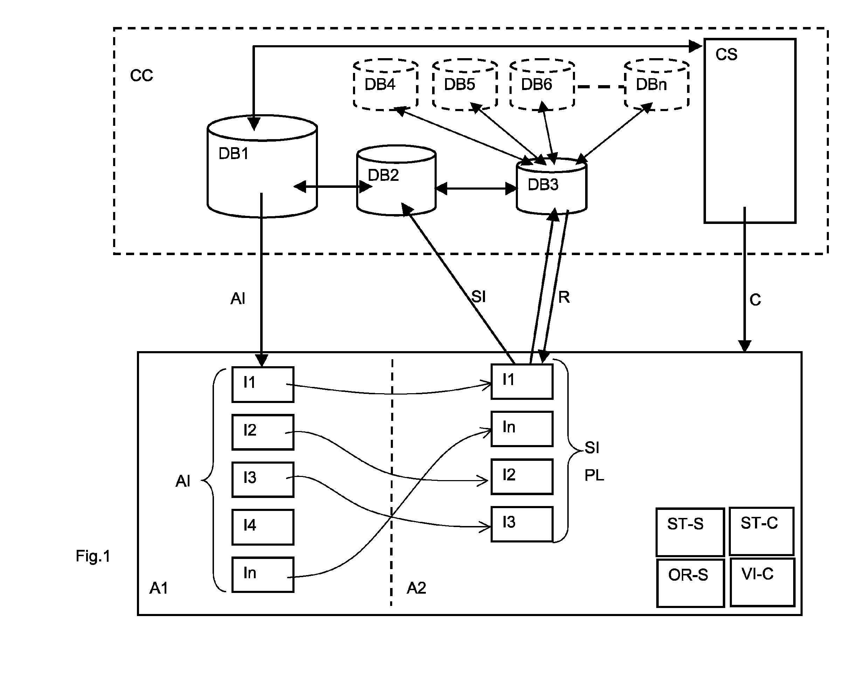

Figure 1 illustrates a system comprising a user's terminal represented with a schematized graphical user interface (GUI) connected to a control center (CC) via a communication network. The control center (CC) includes three databases (DB1, DB2, DB3) and an audio-visual content server (CS). These elements can also be decentralized in several locations as long as they are connected together through the network.

The first database (DB1) lists audio-visual items (I1, I2,...In) available in the content server (CS) and is accessible to the user's terminal. The items (I1, I2,...In) are preferably displayed on the graphical user interface (GUI) in form of a content representative picture, a short movie or an icon accompanied with a description. The latter comprises several elements such as an identifier, a title, a category index, right descriptors, the duration of the piece of video or music corresponding to the item, etc. The user interface (GUI) can include optional filters for displaying only the most useful elements of the items descriptions preventing a confusing presentation of the first database (DB1) content. In an embodiment the user interface (GUI) includes tabs for filtering the items according user defined criteria such as category, type, duration etc.

The graphical user interface (GUI) comprises preferably at least two areas (A1, A2) or windows for displaying respectively available items (AI) contained in the first database (DB1) and items (SI) that the user selects for building a specific play list (PL). These selected items (SI) are recorded in the second database (DB2), in a user determined sequential order, on the second area (A2) of the graphical interface (GUI). According to an embodiment of the user interface (GUI), items are selected in the first area (A1) attached to the first database (DB1) and dropped in a predetermined position in the second area (A2) attached to the second database (DB2). This technique is called drag and drop in known user interfaces. Alternatively, the items can also be copied from the first area (A1) and pasted in the second area (A2) on their respective position.

According to an embodiment of the user interface (GUI), the available items (AI) of the first area (A1) and/or the ones of the play list (PL) are displayed with a colored frame or in association with a colored bar, icon or other graphical symbol. Each color represents a status of the item (I1, I2,...In) relative to information extracted from the database (DB1, DB2). For example, items marked with a red bar cannot be obtained without special rights, the ones with a yellow bar can be obtained in condition that an other item is selected (bundle selection), the ones with a green bar can be obtained with the current user data without restriction.

Each item (SI) moved into the second area (A2) is verified through an access to a third database (DB3), which contains user data. In fact, the user acquires the necessary rights for accessing the audio-visual items in the first database (DB1). For example, a subscription on certain types of content accessible during a predetermined time period or a certain number of times can be concluded with the operator of the control center (CC). These subscription data included in a certificate associated with user's particulars are recorded in the third database (DB3). The right descriptors (R) of the selected items are then compared with the user's rights registered in the certificate. When the results of the comparison are positive, the corresponding item (I1, I2,...In) is recognized as accepted and registered as such in the second database (DB2). Contrarily, in case of a negative result, the item (I1, I2,...In) is rejected and/or marked in order to warn the user that the play list (PL) will be incomplete if the necessary authorization has not been obtained. The user interface (GUI) also comprises secured features allowing acquisition of certificates or modification of previously acquired certificates according for instance to the right descriptors of the selected items (SI).

In an alternative embodiment, the rights verification is carried out after the definition of a complete play list (PL) of items instead of while recording each item individually in the second database (DB2). The advantage is that the user will have a global overview of the play list (PL) with the corresponding results of the verifications and the warnings if any. The items marked as not accepted can be either temporarily stored and the corresponding missing rights obtained through updated certificates or directly suppressed from the play list (PL). The rights verification can take into account the number of selected items to modify the accounting policy. For example, if the user has selected several movies from the same producer, it can benefit of a bundle offer for a reduced price.

Once an audio-visual play list (PL) is terminated and verified through the third database (DB3), it can be stored in this third database (DB3) and proposed later when the user logs on. In an alternative embodiment, the play list (PL) is stored in a memory of the user's terminal for example by clicking a "store play list" (ST-S) button on the user interface (GUI).

On user's request, the play list (PL) can be retrieved from third database (DB3) or the user's terminal memory and the corresponding audio-visual content (C) ordered at the control center (CC) for example by clicking an "order play list" (OR-S) button. The content server (CS) then arranges the content corresponding to each item to form a digital audio-visual data stream according to the items selection information provided by the second database (DB2). The latter is linked to the first database (DB1) connected to the content server (CS), which generates the data stream in a suitable format such as MPEG2, MPEG4 etc. and sends it towards the user's terminal. The stream can be visualized on-line during the downloading by means of any known digital audio-visual player module, for example, by clicking a "view-content" button (VI-C) on the user interface. It can also be stored on a data carrier such as a hard disc, an optical disc CD or DVD, or a static non-volatile Flash type memory, for a later viewing for example by clicking a "store-content" button (ST-C).

According to a preferred embodiment, the stream is sent in an encrypted form in order to prevent abusive distributions and copies via the network towards any non-authorized user. For decrypting the stream, the control center (CC) provides a key with the certificate containing the user's rights. This key is then stored in the third database (DB3) and/or in the user's terminal. To ensure a secured transmission, the certificate containing the decryption key is preferably encrypted with a transmission key at user's disposal. A multimedia reader module such as Windows Media Player that already verifies the user's right achieves the security.

Other parameters can also be included in the certificate such as an expiry date or a number of times for authorizing the decryption with the provided key. In this way the encrypted stream can be decrypted and read only during a limited time and/or only according to a predetermined number of repetitions. The user's terminal configuration can also be set up to prevent the storing of decrypted content from a play list (PL) and authorizing only the storage of encrypted content which then need the decryption key with its using limits for viewing. When the key becomes invalid for a given play list content because, for example of expiration or exceeded number of repeated reading, a new certificate has to be requested at the control center (CC).

The third database (DB3) can be extended for further containing statistics and history recording the usage of audio-visual items. As this database is linked to the other ones, the selected items during a certain period, can be, for example, counted and classified according categories. These data can be taken in account for introducing special buying conditions on a predefined category of audio-video items. For example, if a same category of an item is selected ten times in a week in different play lists, a discount can be offered when ordering the content corresponding to a built sequence. Another possibility is to cumulate the number of selected items in order to obtain for example a free content download relatively to one or several play lists composed afterwards. The third database (DB3) manages thus a user account, which is constantly updated with the usage of the system. Monetary value amounts can also be loaded in this database for prepaying contents, services, access rights or certificates with updated keys. This extension of the third database (DB3) can consist of addition of a supplementary database (DB4, DB5, DB6,...DBn) corresponding to each category of data. A database for history, statistics, user accounting, etc can thus be connected to the other databases of the control center (CC) as represented by dotted lines in figure 1.

In other words, the third database (DB3) and its extensions, playing a role similar to a smart card, is remotely network connected to the user's terminal instead to be connected locally. This feature allows users to move from one terminal to another, without inserting any smart card in a reader, for building audio-visual items play lists as long as access to the user interface (GUI) from different terminals is authorized.

According to a further embodiment of the user interface (GUI), the destination terminal of the content stream can be defined during the order input when the sequence is terminated. This feature allows playing the stream on another terminal equipped with an appropriate reading or playing module without necessarily having the complete sequence-building user interface. It has to be noted that, the certificate has to be loaded into this terminal during an identification session with the control center (CC) respectively with the third database (DB3) in order to get at least the key for decrypting the stream. For example, the destination terminal can be a mobile equipment like a mobile phone, a portable computer or a PDA (Personal Digital Assistant), able to be connected on a fast mobile network like UMTS (Universal Mobile Telecommunications System), WIFI (Wireless Fidelity), WIMAX (Worldwide Interoperability for Microwave Access), etc. Game consoles having Internet connection features like PSP Sony Playstation can also be used as terminal as well for building a play list as for playing content from a user database downloaded play list.

The different terminals used for playing the stream content of a given user, can be registered in the third database (DB3) with the other user particulars in order to simplify the access procedure. The control center takes into account the terminal currently selected for the download for modifying the stream format and eventually the billing. As an example, a reduced price will be charged if the content is streamed onto a PDA with a low resolution.

Additional databases (DB4, DB5, DB6,...DBn) can be included into the system for filtering and managing information related to the item's content, which can be sorted according to various criteria. A database for each criterion can thus be created as for example special events (holidays, commemorations, anniversaries...), geographical location, commercial parameters as sponsored items, promotions for marketing purposes, etc. The navigation on the user interface, among the available items will then be guided for facilitating or preventing the access to the items related to these additional databases depending on current circumstances. Filtering for blocking access (blackouts) to concerts, movies or sport events that are taking place in a public location (theater, stadium, cinema, etc.) near a given geographical region can be carried out to encourage people for enjoying events in live. Items to be absolutely selected for building a play list can be highlighted with colored framing or any other special marking.

To avoid contradictory situations with items that are for example free of charge because of a holiday and in the same time chargeable in other periods and sponsored in certain cities, a particular database establishes priorities associated to these events information. In this way, the user account will not be unduly debited thanks to the handling process carried out by multiple databases.

Another way to underline items is to propose a complete play list, which the user can modify or not. The user interface will then become dynamic since its displayed objects change at each starting up or refreshing in accordance with events happening in a given environment and time. Such a play list can be enriched with information related to the conditions for getting the items content as for example free of charges, included in the user subscription, prepaid, fees paid by a sponsor, rights to acquire etc. These data can be displayed with an intuitive color code as described above in an embodiment of the user interface.

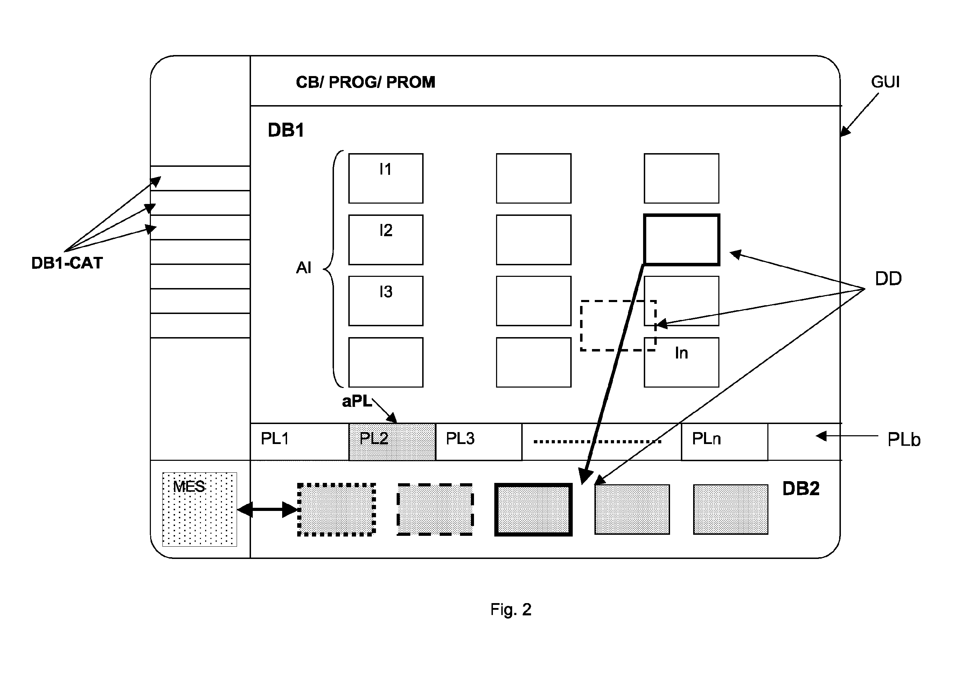

Figure 2 shows a generic graphical user interface (GUI) for personal computer using a dynamic play list engine allowing as well navigating among several play lists, as displaying, editing and playing a play list. The central part of the display constituting a visual interface is occupied by items or clips (I1, I2, I3,..., In) available from the first database (DB1) and by a title bar (CB/PROG/PROM) displaying content brands (CB), programming (PROG), promotions (PROM) and further advertisements. The clips are preferably sorted according to a category (jazz, pop, rock, opera, etc ) chosen with corresponding buttons (CAT-DB1 ) on the left side of the display. A drag and drop function (DD) allows to select and manage items within the visual interface for building a play list at the bottom of the display. This operation updates the second database (DB2), which holds all play lists (PL1, PL2, PL3,...PLn) displayed in navigation bar (PLb). Each play list (PL1, PL2, PL3,...PLn) from the bar can be activated (active play list aPL) as shown in gray on the figure for editing with clips taken from the first database (DB1). Selected clips from a play list can also be arranged in a different order or they can be suppressed and replaced by other ones. A clip is generally represented by a steady or animated picture extracted from the clip surrounded for example with a color-coded frame or other specific pattern for supplementary information. The latter comprise variable permissions, rights status, promotions relative to the selected clip. Messages (MES) linked to sponsored offers within a play list or other special indications can be displayed at the left bottom corner under the category (DB1-CAT) buttons.

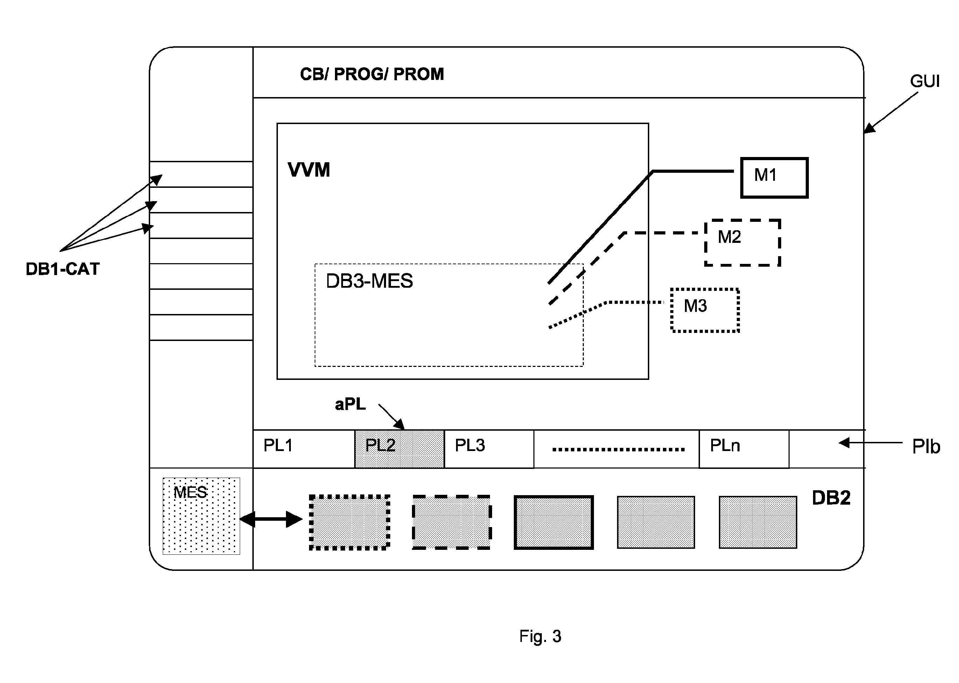

Figure 3 represents the same generic graphical user interface (GUI) switched on a mode for on-line viewing, with a video viewing monitor (VVM), a selected play list, which content is downloaded from the content server (CS), see figure 1. Another display mode allows reading explanations related to the way for obtaining the content according to the color-coded frame around the clips (help function). For example, a message (M1) indicates that a subscription to a jazz channel allows getting the plain black-framed clips for free. A message (M2) informs that Sony offers the dotted line framed clips and a message (M3) says that the subscription to the dotted framed rock category clips is expired. These messages are generated and sent by the third database (DB3) which role is to manage the rights for obtaining the content related to a selected play list.

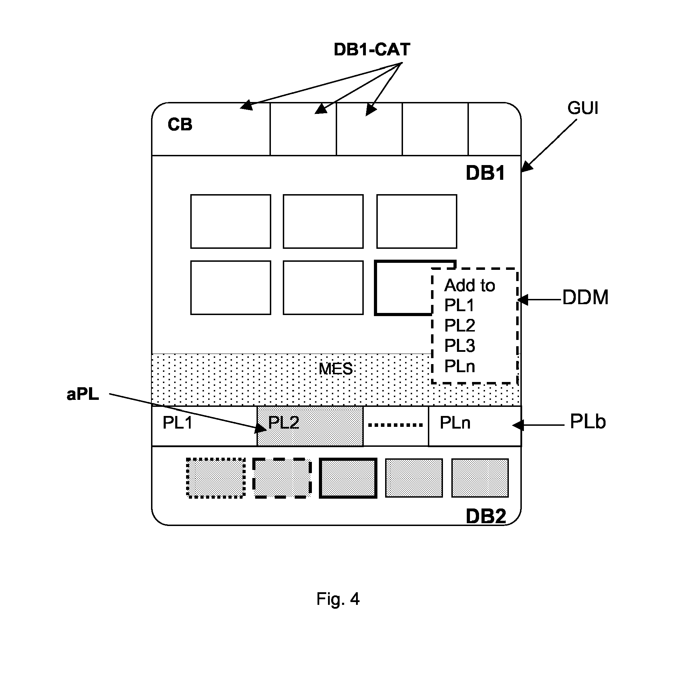

Figure 4 shows an example of a simplified graphical user interface (GUI) designed for Personal Digital Assistant (PDA) having mainly the same functions as the one for personal computer. The drag and drop function for adding clips to a play list is replaced by a drop down menu (DDm) and the message area (MES) is positioned for an optimal reading of information messages related to the clips.

It has to be noted that the user interfaces of figures 2 to 4 are only explanatory examples, their graphical arrangement including the functionalities can be adapted in many other ways according to the terminal and network communications capabilities.

## Claims

1. Method for remotely organizing audio-visual items (I1, I2,...In) stored in a first database (DB1) and managed by a control center (CC), each item (I1, I2,...In) having at least an identifier, a rights descriptor and at least one visual extract associated with the content of the item (I1, I2,...In), said method comprising the steps of :
- defining a second database (DB2) comprising a user's list of selections, each selection comprising at least the item's identifier and a position in the list,
- displaying on a remote user's terminal display (GUI) a plurality of visual extracts of the available audio-visual items (AI) on a first area (A1) of said display (GUI),
- displaying on the remote user's terminal display (GUI) the visual extracts related to the item's identifier contained in the second database (DB2) on a second area (A2),
- selecting by the user one visual extract related to a selected audio-visual item (I1, I2,...In)) from the first area (A1) and moving it towards the second area (A2) and defining the position in the user's list by visually placing the moved item (I1, I2,...In) in the desired position among the previously selected items (SI, PL), this selection updating the second database (DB2) with the selected item's identifier of the moved item (11, I2,...In),
- accessing a third database (DB3) containing user's definition and rights, verifying the user's selected items (SI, PL) by comparing the rights descriptor with the user's rights from said database (DB3),
- transmit a request to the control center (CC) for obtaining the content (C) associated to the selected audio-visual items (SI, PL),
- sending from the control center (CC) to the user's terminal a data stream including the content (C) arranged in a sequence defined in the list of the selected audio-visual items (SI, PL).
- updating the third database (DB3) with the transmitted items (I1, I2,...In) for accounting purpose.

2. Method according to claim 1, **characterized in that** the rights of the selected items (SI, PL) are verified individually on each item (I1, I2,...In) after its placing in the second area (A2) of the display.

3. Method according to claim 1, **characterized in that** the rights of the selected items (SI, PL) are verified after placing of all selected items (SI, PL) in the second area (A2) of the display.

4. Method according to claim 1, **characterized in that** in case of a negative result of the comparison between the rights descriptor of an item (I1, I2,...In) and the user's rights recorded in the third database (DB3), the concerned items (I1, I2,...In) are either rejected or marked as needing rights updates.

5. Method according to claim 1 and 4, **characterized in that** the user interface (GUI) comprises means for acquiring or updating rights associated the selected items (SI, PL), said rights being included in a certificate delivered by the control center (CC).

6. Method according to claim 1, **characterized in that** the data stream including the content is sent in an encrypted form to the user's terminal, and **in that** a decryption key is provided by the control center (CC) with a certificate containing the user's rights and stored in the third database (DB3) and/or in the user's terminal.

7. Method according to claim 6, **characterized in that** the certificate includes parameters restricting the authorization for decrypting the data stream with the provided key.

8. Method according to claim 1, **characterized in that** the third database (DB3) manages a user account comprising history and statistics established in respect of particulars of the selected items (SI, PL).

9. Method according to claim 1, **characterized in that** the request to the control center (CC) for obtaining the content (C) associated to the selected audio-visual items (SI, PL) is completed with the definition of the destination terminal allowing playing said content (C), said definition being registered in the third database (DB3).

10. Method according to claim 1, **characterized in that** it includes additional databases (DB4, DB5, DB6,..., DBn) for filtering and managing information related to the item's content, said information being sorted according to criteria related to events, geographical location or commercial parameters.
